# EUROPÄISCHE PATENTANMELDUNG

(11) **EP 3 070 414 A1**
(43) Veröffentlichungstag der Anmeldung: **21.09.2016**
(21) Anmeldenummer: 15160010.3
(22) Anmeldetag: 20.03.2015
(51) Int. Cl.: F24J 2/05, F24J 2/24, F24J 2/48, F24J 2/50, F24J 2/40, B29C 47/00

(54) **Solarkollektor und Verfahren zu dessen Herstellung**

(71) Anmelder: Universität Stuttgart, 70174 Stuttgart (DE)
(72) Erfinder: Erb, Thomas, 70174 Stuttgart (DE)
(74) Vertreter: Ege & Lee Patentanwälte

(57) **Zusammenfassung**

Die Erfindung betrifft einen Solarkollektor (1) und ein Verfahren zu dessen Herstellung enthal-tend eine zumindest in Einstrahlrichtung (8) der Sonne (9) lichtdurchlässige, aus Kunststoff extrudierte Schale (2) und zumindest einen in dieser beabstandet aufgenommenen, mit einer Absorberschicht (7) versehenen Strömungskanal (5). Um die Herstellung zu vereinfachen und einen kostengünstigen Solarkollektor (1) mit hohem Wirkungsgrad herstellen zu können, sind die Schale (2), der zumindest eine Strömungskanal (5) und die Absorberschicht (7) einteilig ausgebildet.

## Beschreibung

Die Erfindung betrifft einen Solarkollektor und ein Verfahren zu dessen Herstellung enthaltend eine zumindest in Einstrahlrichtung der Sonne lichtdurchlässige, aus Kunststoff extrudierte Schale und zumindest einen in dieser beabstandet aufgenommenen, mit einer Absorberschicht versehenen Strömungskanal.

Solarkollektoren beziehungsweise Sonnenkollektoren erfassen Licht- und Wärmestrahlung der Sonne, wobei in zumindest einem Strömungskanal in einem Kreislauf geführtes Medium erwärmt wird. Das erwärmte Medium wird über einen in dem Kreislauf eingebundenen Wärmetauscher geführt, der dem Medium wieder Wärme entzieht. Hierbei sind sogenannte Flachkollektoren und Vakuumröhrenkollektoren zu unterscheiden.

In einem beispielsweise aus der EP 0 004 060 B1 bekannten Flachkollektor sind in einer äußeren, licht- und wärmedurchlässigen Schale mehrere nebeneinander liegende Strömungskanäle mit Abstand zur Schale angeordnet. Zur Verbesserung der Wärmeübertragung sind in die Strömungskanäle streifenförmige Wärmeabsorber eingelegt. Aus der DE 20 2006 015 717 U1 ist ein Flachkollektor bekannt, dessen Schale und Strömungskanäle aus einem Hohlkammerprofilbauteil gebildet sind. Zur Verbesserung der Wärmeübertragung sind in die Strömungskanäle Rohre aus wärmeabsorbierendem Material eingebracht.

Vakuumröhrenkollektoren sind aus einzelnen, nebeneinander angeordneten Strömungskanälen aus Metall, beispielsweise Kupfer gebildet, die jeweils von einer Vakuumröhre aus Glas umgeben sind. Auf der der Einstrahlungsseite der Sonne abgewandten Seite sind Reflexbleche oder -folien vorgesehen, die Sonnenstrahlung auf die Strömungskanäle fokussieren. Infolge dieses Aufbaus weisen die Vakuumröhrenkollektoren einen wesentlich höheren Wirkungsgrad als die Flachkollektoren auf, sind jedoch sehr aufwendig zu fertigen und entsprechend kostenaufwendig.

Aufgabe der Erfindung ist, einen Solarkollektor vorzuschlagen, der einfach und kostengünstig herzustellen ist und einen höheren Wirkungsgrad als Flachkollektoren aufweist. Weiterhin ist Aufgabe der Erfindung ein Verfahren zur Herstellung eines derart verbesserten Solarkollektors vorzuschlagen

Die Aufgabe wird durch den Gegenstand des Anspruchs 1 und die Merkmale des Verfahrens gemäß Anspruch 13 gelöst. Die von diesen abhängigen Ansprüche geben vorteilhafte Ausführungsformen des Gegenstands des Anspruchs 1 beziehungsweise des Anspruchs 13 wieder.

Der vorgeschlagene Solarkollektor enthält eine zumindest in Einstrahlrichtung der Sonne lichtdurchlässige, aus Kunststoff extrudierte Schale. Der verwendete Kunststoff kann im Einstrahlungsbereich der Sonne glasklare oder opake Eigenschaften aufweisen. Der vorgeschlagene Kunststoff kann gegen UV-Strahlung stabil oder stabilisiert ausgebildet sein. Weiterhin kann der Kunststoff schlagzäh gegenüber Witterungseinflüssen ausgebildet sein. Alternativ oder zusätzlich kann zumindest in Witterungs- und Einstrahlrichtung eine Schutzscheibe vorgesehen sein. Vorteilhafte Kunststoffe können beispielsweise Polycarbonat (PC), Cyclo-Olefin-Copolymeren (COC), Acrynitryl-Butadien-Styrol-Copolymeren (ABS) und dergleichen sein. Beispielsweise mittels Rippen, Verbindungsstegen oder dergleichen sind beabstandet zu der Schale zumindest ein, bevorzugt mehrere, bezogen auf ihre Längserstreckung beabstandet nebeneinander mehrere Strömungskanäle angeordnet, die an ihren Längsseiten jeweils mit einem Zu- und Abfluss versehen sind, die beispielsweise mit einem Wärmetauscher in Strömungsverbindung stehen. Schale und Strömungskanäle sind dabei aus demselben Material extrudiert, so dass eine Länge des Solarkollektors im Wesentlichen frei einstellbar vorgesehen sein kann. Die Zu- und Abflüsse lassen eine serielle oder bevorzugt parallele Durchströmung mittels entsprechender stirnseitiger Anschlussstücke zu.

Zur Verbesserung der Absorption von Strahlung der Sonne im sichtbaren Bereich und als Wärmestrahlung im Infrarotbereich (IR-Strahlung), deren Umwandlung in Wärme und deren Übertragung auf das in den Strömungskanälen vorgehaltene Wärmeträgermedium wie -fluid, beispielsweise Glycol-Wasser-Gemische wie Propylenglycol oder Ethylenglycol oder eine eine Sole, ist in oder an dem zumindest einen Strömungskanal eine Absorberschicht vorgesehen, die die einfallende Strahlung in verbesserter Weise als der Kunststoff der Schale in Wärme umsetzt. Beispielsweise ist eine derartige Absorberschicht schwarz und kann einen Teil oder insbesondere den gesamten Querschnitt des zumindest einen Strömungskanals umgeben.

Um die Fertigung zu vereinfachen, insbesondere um die Anzahl der vorzuhaltenden Bauteile und deren Montage ineinander zu vereinfachen, sind in der vorgeschlagenen Weise die Schale, der zumindest eine Strömungskanal und die Absorberschicht einteilig ausgebildet. Eine derartige einteilige Ausbildung des Solarkollektors erfolgt bevorzugt mittels eines Extrusionsverfahrens, bei dem die Schale ein Hohlkammerprofil aus extrudiertem Kunststoff mit dem zumindest einen inneren, durch Rippen unter Bildung zumindest einer Hohlkammer beabstandeten Strömungskanal bildet. Die Absorberschicht wird aus einem auf die Wärmeübertragung optimierten Kunststoff hergestellt, die zusammen mit dem Kunststoff für das Hohlkammerprofil koextrudiert wird. Hierbei kann die Absorberschicht über den gesamten Innenumfang und deren gesamte Länge des beziehungsweise der Strömungskanäle vorgesehen sein oder den Strömungskanal selbst bilden. In bevorzugter Weise nimmt die Kunststoffkomponente der Schale die mechanischen Lasten des Solarkollektors einschließlich des Drucks des Wärmeträgerfluids auf, wobei die Kanalwandung des zumindest einen Strömungskanals aus der Absorberschicht gebildet ist. Gleichzeitig weist die Absorberschicht in bevorzugter Weise eine gute Wärmleitfähigkeit auf, um die aufgenommene Wärme gut leitend auf das Wärmeträgerfluid übertragen zu können. Die Absorberschicht kann aus mit Graphit gefülltem wie verstärktem Kunststoff gebildet sein. In bevorzugter Weise ist hierbei die Absorberschicht stoffschlüssig mit dem zumindest einen Strömungskanal verbunden.

Der vorgeschlagene Solarkollektor kann im Sinne eines Flachkollektors mit mehreren parallel nebeneinander angeordneten Strömungskanälen und einer im Wesentlichen flachen Ober- und Unterseite ausgebildet sein. In einer besonders vorteilhaften Ausführungsform kann der Solarkollektor einem Vakuumröhrenkollektor nachempfunden sein. Hierbei ist die Schale so ausgebildet, dass zumindest die Unterseite, das heißt die sonnenabgewandte Seite den Rundungen der Strömungskanäle mit einer in einem größeren Radius zumindest teilweise folgt. Hierbei kann an diesen Rundungen an der dem Sonnenlicht abgewandten Seite der Schale an deren Innenseite, an deren Außenseite oder in der Schale eine Reflexionsschicht angeordnet sein. Diese Reflexionsschicht lenkt aufgrund ihrer kreissegmentförmigen Anordnung um den zumindest einen Strömungskanal die Schale durchdringende und nicht auf den Strömungskanal treffende Sonnenstrahlung von hinten oder von der Seite auf den Strömungskanal, so dass die Wirkung des Solarkollektors bei vereinfachter Fertigung gegenüber einem Vakuumröhrenkollektor gegenüber einem Flachkollektor verbessert ist.

Die Anbringung der Reflexionsschicht kann beispielsweise durch Auftrag auf die Außenseite der Schale, beispielsweise durch Aufdampfen einer Metallschicht erfolgen. In vorteilhafter Weise kann die Reflexionsschicht mit der Schale koextrudiert hergestellt sein. Hierbei kann beispielsweise ein Metallstreifen oder ein metallisierter Kunststoffstreifen längs eines Strömungskanals an der Innenseite der Schale oder in der Schale stoffschlüssig eingebunden sein. Es kann auch vorteilhaft sein, in der Extrusionsanlage eine Kunststoffkomponente mit reflektierenden Partikeln, beispielsweise plättchenförmigen Metallpartikeln vorzuhalten und diese zusammen mit den restlichen Kunststoffkomponenten zu koextrudieren. Eine entsprechende Ausrichtung der Partikel kann beispielsweise magnetisch, tribologisch, strömungstechnisch oder dergleichen vorgesehen sein.

Gemäß einer weiteren vorteilhaften Ausführungsform des vorgeschlagenen Solarkollektors kann dieser in einem Einstrahlungsbereich der Sonne eine Schutzschicht aufweisen, die abhängig von der Betriebstemperatur des Solarkollektors ihre Lichtdurchlässigkeit ändert, um den Solarkollektor beispielsweise bei Stagnation des Wärmeübertragungsmediums vor Überhitzung zu schützen. Eine derartige Schutzschicht kann auf eine vorgeschaltete Schutzscheibe, die gleichzeitig der Witterungsfestigkeit dienen kann, aufgebracht oder aus dieser gebildet sein. In bevorzugter Weise ist die Schutzschicht auf oder in die Oberfläche der Schale eingebracht. Diese kann durch Aufbringen einer separaten Schutzschicht, beispielsweise einer Schutzfolie vorgesehen sein. Bevorzugt ist die Schutzschicht mit der Schale koextrudiert hergestellt. In einer bevorzugten Ausführungsform kann ein Kunststoff verwendet werden, der abhängig von dessen Temperatur bei niederen Temperaturen glasklar oder opak ausgebildet ist und bei höheren Temperaturen, beispielsweise bei die Schale schädigenden Temperaturen, beispielsweise bei Temperaturen zwischen 150 °C bis 180 °C zumindest einen Teil der auftreffenden Sonnenstrahlung streut. Eine derartige Streuung kann beispielsweise durch eine Kunststoffkomponente erzielt werden, welche unterschiedliche Kunststoffbestandteile, beispielsweise Mikrokristalle, Mikropartikel oder andere Mikrostrukturen enthält, die ihren Brechungsindex mit zunehmender Temperatur unterschiedlich ändern, jedoch bei niedrigen Temperaturen, beispielsweise Temperaturen unter 150 °C und damit im relevanten Bereich einer Aufnahme der Wärmestrahlung im Wesentlichen denselben Brechungsindex aufweisen. Derartige thermochrome oder thermotrope Kunststoffe beziehungsweise Kunststoffmischungen können beispielsweise aus Acrynitryl-Butadien-Styrol-Copolymeren (ABS) oder deren Mischungen gebildet sein. Es versteht sich, dass das gesamte Hohlkammerprofil aus thermotropen oder thermochromen Materialien hergestellt sein kann, wobei der thermischen Beständigkeit wegen gegenüber den auftretenden Temperaturen an dem Strömungskanal und der Absorberschicht temperaturbeständige Materialien wie beispielsweise Polycarbonat vorgesehen werden..

Zur weiteren Verbesserung des Wirkungsgrads kann kann das Hohlkammerprofil abgeschlossen sein. Die Hohlkammer beziehungsweise das in dem Hohlkammerprofil eingeschlossene Volumen kann, soweit im Rahmen der Eigenschaften des die Schale bildenden Kunststoffs wie beispielsweise Gasdurchlässigkeit, mechanische Festigkeit, teilevakuiert sein. Hierbei ist/sind die Hohlkammer(n) an den Stirnseiten des Hohlkammerprofils mittels der Abschlusstücke zur Verbindung der Strömungskanäle mit einem Wärmekreislauf dicht verschlossen. Alternativ oder zusätzlich können/kann die Hohlkammer(n) des Hohlkammerprofils separat beispielsweise durch Scheibenteile aus Kunststoff oder Blech dicht verschlossen werden und anschließend die Abschlussstücke aufgesetzt werden. Alternativ kann vorgesehen sein, die Hohlkammern des Hohlkammerprofils mit Luft zu durchströmen, um diese mit der von der Absorberschicht nach außen abgegebenen Wärme zu erhitzen und die abgeführte warme Luft beispielsweise zur Gebäudeklimatisierung zu nutzen.

Das vorgeschlagene Verfahren dient der Herstellung des vorgeschlagenen Solarkollektors mittels eines Extrusionsverfahrens, wobei in jeweils einem Extruder eine die Schale und den zumindest einen Strömungskanal bildende erste Kunststoffkomponente und eine zweite, die Absorberschicht bildende Kunststoffkomponente aufgeschmolzen bereitgehalten und in einem gemeinsamen Extrusionsprozess extrudiert werden. Eine entsprechende Extrusionsanlage kann dabei beispielsweise aus einem oder mehreren Extrudern, einem Extrusionswerkzeug, einer Kalibrierung und Kühlstrecke sowie einer Abzugs- und Schneideeinrichtung bestehen. Für die Werkstoffkomponenten der Schale und der Absorberschicht ist jeweils ein Extruder vorgesehen, welche kontinuierlich die Kunststoffschmelze des entsprechenden Kunststoffs für die Schale und die Absorberschicht erzeugen und Druck aufbauen. Im Extrusionswerkzeug werden die verschiedenen Kunststoffschmelzeströme zusammengeführt und kontinuierlich zu dem vorgeschlagenen Hohlkammerprofil ausgeformt. Hierbei verlässt das Hohlkammerprofil das Extrusionswerkzeug in "flüssigem", das heißt noch nicht formstabilem Zustand das Extrusionswerkzeug und wird in der sogenannten Kalibrierung unter Formzwang so weit abgekühlt, bis es im Wesentlichen formstabile Eigenschaften aufweist. In der nachfolgenden Kühlstrecke wird das Profil weiter abgekühlt, bis es schließlich mittels einer Schneidvorrichtung auf die vorgesehene, variabel einstellbare Länge abgelängt werden kann.

Zur Herstellung eines Solarkollektors mit einer Reflexionsschicht an der Unterseite des Solarkollektors kann mit einem weiteren Extruder eine dritte Kunststoffkomponente mit reflektierenden Partikeln, beispielsweise Metallpartikeln, zur gemeinsamen Extrusion mit der ersten und zweiten Kunststoffkomponente bereitgehalten und mit diesen koextrudiert werden. Soll eine Reflexfolie, beispielsweise eine Metallfolie als Reflexionsschicht vorgesehen werden, kann diese beispielsweise von einer Rolle durch das Extrusionswerkzeug hindurchgezogen und entsprechend dem Vorschub des herzustellenden Hohlkammerprofils in die Schale eingebracht werden.

Zur Herstellung der vorgeschlagenen Schutzschicht eines Solarkollektors kann in einem weiteren Extruder eine vierte Kunststoffkomponente aufgeschmolzen bereitgehalten werden, die mit der ersten und zweiten Kunststoffkomponente und gegebenenfalls mit der Reflexfolie oder der dritten Kunststoffkomponente koextrudiert wird.

Zusammenfassend weist eine bevorzugte Ausführung des vorgeschlagenen Solarkollektors und das Verfahren zu dessen Herstellung in nicht abschließender Aufzählung folgende Merkmale und Vorteile auf:
- Die lichtdurchlässige Komponente des Solarkollektors ist als gegebenenfalls evakuierbares Hohlkammerprofil mit zumindest einem Strömungskanal und einer einteilig mit diesem verbundenen, den zumindest einen Strömungskanal umgebenden Absorberschicht ausgebildet,
- der Solarkollektor ist entsprechend einem längsgestrecken Kunststoffhohlspiegel mit dem oder den Strömungskanälen entlang einer Brennpunktlinie ausgebildet,
- der Solarkollektor weist zum Schutz vor Überwärmung eine sich temperaturabhängig eintrübende Schutzschicht auf,
- geringeres Gewicht und geringere Kosten gegenüber Vakuumröhrenkollektoren,
- wesentlich höherer Wirkungsgrad gegenüber Flachkollektoren,
- Herstellbarkeit in einem kontinuierlichen Verfahren mit im Wesentlichen beliebigen Längen mittels eines Extrusionsverfahrens,
- modulare Bauweise mit leichter Anpassung an bauliche Vorgaben möglich.

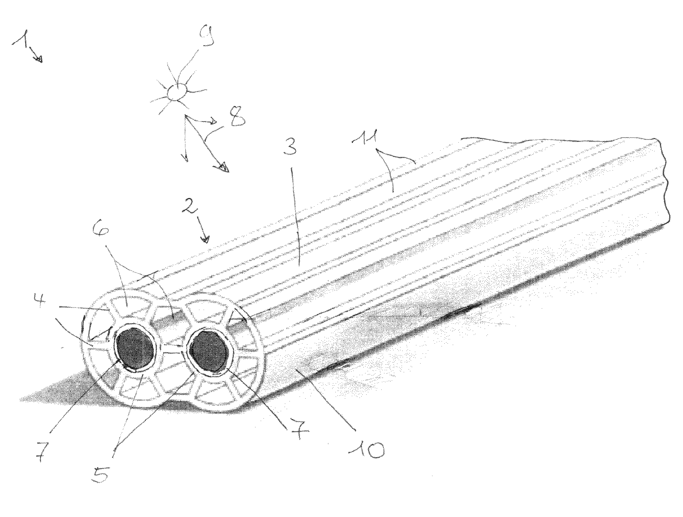

Die Erfindung wird anhand des in der einzigen Figur dargestellten Ausführungsbeispiels näher erläutert. Diese zeigt eine Ausführungsform eines Solarkollektors in 3D-Teilansicht.

Die Figur zeigt den Solarkollektor 1 in Teilansicht mit der aus durchsichtigem Kunststoffmaterial, beispielsweise PC, COC oder ABS hergestellten Schale 2. Die Schale 2 bildet das Hohlkammerprofil 3, an dem radial innen in dem gezeigten Ausführungsbeispiel lediglich zwei parallel zueinander mittels der Rippen 4 nach außen und gegeneinander beabstandete, mit im Durchflussbetrieb durchgeführtem Wärmeübertragungsfluid befüllte Strömungskanäle 5 unter Bildung von Hohlkammern 6 angeordnet sind. In weiteren Ausführungsformen können nur ein Strömungskanal oder mehrere beispielsweise drei bis zu einer Vielzahl von Strömungskanälen entsprechend nebeneinander angeordnet sein. Durch Abschluss der Hohlkammern 6 an den Stirnseiten können diese abdichtet und gegebenenfalls evakuiert sein, um die Strömungskanäle 5 nach außen besser gegen Wärmeverlust zu isolieren.

In den Strömungskanälen 5 ist jeweils eine Absorberschicht 7 einteilig beispielsweise durch Koextrusion stoffschlüssig eingebracht, die die Kanalinnenwand dieser bildet. Die Absorberschicht ist aus bevorzugt schwarzem und wärmeleitfähigem Material gebildet. Beispielsweise kann die Absorberschicht aus mit Graphit oder mit anderen geeigneten Fasern, Kugeln, Partikel oder dergleichen gefülltem Kunststoff gebildet sein. Beispielsweise können Füllgrade zwischen 20 Gewichtsprozent bis 80 Gewichtsprozent Graphit in PC, COC, ABS oder dergleichen vorteilhaft sein. Die von der der Einstrahlrichtung 8 der Sonne 9 abgewandten Flächen der Schale 2 sind mit der Reflexionsschicht 10 versehen. Aufgrund der im Querschnitt runden, kreissegmentförmigen und radial von den Strömungskanälen 5 konzentrisch beabstandeten Bereiche der Schale 2 mit der Reflexionsschicht 10 liegen die Strömungskanäle 5 im Rückstrahlbereich der Sonneneinstrahlung, so dass das Wärmeübertragungsfluid zusätzlich erwärmt wird. Die Reflexionsschicht 10 kann aufgedampft oder in Form einer Kunststoffkomponente mit reflektierenden Partikeln oder als Reflexfolie mit der Schale 2 koextrudiert werden.

Zumindest in Einstrahlrichtung 8 der Sonne 9 ist auf der Schale 2 die Schutzschicht 11 aufgebracht. Die Schutzschicht 11 ist aus thermochromem oder thermotropem Material hergestellt und verändert temperaturabhängig die Einstrahlungsintensität der Sonne 9 und verhindert damit Temperaturschäden an dem Solarkollektor 1 und dessen Überhitzung. In bevorzugter Weise ist die Schutzschicht aus Kunststoff, beispielsweise aus einer Mischung aus unterschiedlichen oder gleichen Kunststoffsorten mit sich über die Temperatur änderndem Brechungsindex gebildet, so dass die bei geringen Temperaturen glasklare Mischung mit zunehmender Temperatur durch die einzelnen, das einfallende Licht in unterschiedliche Richtungen streuenden Partikel oder Mikrokristalle eintrübt. Es hat sich hierbei als vorteilhaft gezeigt, wenn die Schutzschicht 11 zusätzlich mit der Kunststoffkomponente der Schale 2 koextrudiert wird.

### Bezugszeichenliste

- 1: Solarkollektor
- 2: Schale
- 3: Hohlkammerprofil
- 4: Rippe
- 5: Strömungskanal
- 6: Hohlkammer
- 7: Absorberschicht
- 8: Einstrahlrichtung
- 9: Sonne
- 10: Reflexionsschicht
- 11: Schutzschicht

## Patentansprüche

1. Solarkollektor (1) enthaltend eine zumindest in Einstrahlrichtung (8) der Sonne (9) lichtdurchlässige, aus Kunststoff extrudierte Schale (2) und zumindest einen in dieser beabstandet aufgenommenen, mit einer Absorberschicht (7) versehenen Strömungskanal (5), **dadurch gekennzeichnet, dass** die Schale (2), der zumindest eine Strömungskanal (5) und die Absorberschicht (7) einteilig ausgebildet sind.

2. Solarkollektor (1) nach Anspruch 1, **dadurch gekennzeichnet, dass** die Schale ein Hohlkammerprofil (3) aus extrudiertem Kunststoff mit dem zumindest einen inneren, durch Rippen unter Bildung zumindest einer Hohlkammer (6) beabstandeten Strömungskanal (5) bildet.

3. Solarkollektor (1) nach Anspruch 1 oder 2, **dadurch gekennzeichnet, dass** die Absorberschicht (7) aus mit Graphit befülltem Kunststoff gebildet ist.

4. Solarkollektor (1) nach einem der Ansprüche 1 bis 3, **dadurch gekennzeichnet, dass** die Absorberschicht (7) stoffschlüssig mit dem zumindest einen Strömungskanal (5) verbunden ist.

5. Solarkollektor (1) nach einem der Ansprüche 1 bis 4, **dadurch gekennzeichnet, dass** die Schale (2), der zumindest eine Strömungskanal (5) und die Absorberschicht (7) in einem Extrusionsverfahren einteilig hergestellt sind.

6. Solarkollektor (1) nach einem der Ansprüche 1 bis 5, **dadurch gekennzeichnet, dass** die Schale (2) an einer sonnenabgewandten Seite mit einer in einem größeren Radius als der zumindest eine Strömungskanal (5) kreissegmentförmig um den zumindest einen Strömungskanal (5) angeordnete Reflexionsschicht (10) versehen ist.

7. Solarkollektor (1) nach Anspruch 6, **dadurch gekennzeichnet, dass** die Reflexionsschicht (10) mit der Schale (2) koextrudiert hergestellt ist.

8. Solarkollektor (1) nach einem der Ansprüche 1 bis 7, **dadurch gekennzeichnet, dass** in einem Einstrahlungsbereich der Sonne ein von der Betriebstemperatur des Solarkollektors (1) ihre Lichtdurchlässigkeit ändernde Schutzschicht (11) aufgebracht ist.

9. Solarkollektor (1) nach Anspruch 8, **dadurch gekennzeichnet, dass** die Schutzschicht (11) mit der Schale (2) koextrudiert hergestellt ist.

10. Solarkollektor (1) nach Anspruch 8 oder 9, **dadurch gekennzeichnet, dass** die Schutzschicht (11) aus unterschiedlichen Kunststoffbestandteilen mit sich abhängig von der Temperatur unterschiedlich ändernden Brechungsindizes ausgebildet ist.

11. Solarkollektor (1) nach einem der Ansprüche 1 bis 10, **dadurch gekennzeichnet, dass** aus mehreren, nebeneinander parallel angeordneten Strömungskanälen (5) ein flächiger Solarkollektor (1) mit einer vorgegebenen Länge und Breite gebildet ist, wobei die einzelnen Strömungskanäle (5) in einer Parallelschaltung in einen Wärmekreislauf eingebunden sind.

12. Solarkollektor (1) nach einem der Ansprüche 2 bis 11, **dadurch gekennzeichnet, dass** die zumindest eine Hohlkammer (6) luftdicht abgeschlossen ist.

13. Verfahren zur Herstellung eines Solarkollektors (1) gemäß den Ansprüchen 1 bis 12, **dadurch gekennzeichnet, dass** in einer Extrusionsanlage in jeweils einem Extruder eine die Schale (2) und den zumindest einen Strömungskanal (5) bildende erste Kunststoffkomponente und eine zweite, die Absorberschicht (7) bildende Kunststoffkomponente aufgeschmolzen bereitgehalten und in einem gemeinsamen Extrusionsprozess in einem Extrusionswerkzeug die Kunststoffkonponenten koextrudiert werden.

14. Verfahren nach Anspruch 13, **dadurch gekennzeichnet, dass** in der Extrusionsanlage in einem weiteren dem Extruder eine dritte Kunststoffkomponente mit reflektierenden Partikeln vorgehalten oder über das Extrusionswerkzeug in oder an die erste Kunststoffkomponente geführte Reflexfolie mit der ersten und zweiten Kunststoffkomponente in dem Extrusionswerkzeug koextrudiert werden.

15. Verfahren nach Anspruch 13 oder 14, **dadurch gekennzeichnet, dass** in einem weiteren Extruder der Extrusionsanlage eine vierte Kunststoffkomponente aufgeschmolzen bereitgehalten wird, die mit der ersten und zweiten Kunststoffkomponente und gegebenenfalls mit der Reflexfolie oder der dritten Kunststoffkomponente in dem Extrusionswerkzeug koextrudiert wird.
